# EUROPEAN PATENT APPLICATION

(11) **EP 4 708 445 A1**
(43) Date of publication of application: **11.03.2026**
(21) Application number: 24845873.9
(22) Date of filing: 10.07.2024
(51) Int. Cl.: H01M 10/42, H01M 10/04, H01M 50/107, H01M 50/152, H01M 50/179, H01M 50/538, H01M 50/578, H01M 50/581, H01M 50/449

(54) **SECONDARY BATTERY**

(30) Priority: 21.07.2023 KR 20230095641; 08.07.2024 KR 20240089909
(71) Applicant: LG Energy Solution, Ltd., Seoul 07335 (KR)
(72) Inventor: KANG, Gyung Soo, Daejeon 34122 (KR); HONG, Eui Jin, Daejeon 34122 (KR)
(74) Representative: Goddar, Heinz J.
(86) International application number: PCT/KR2024/009817
(87) International publication number: WO 2025/023570

(57) **Abstract**

A secondary battery according to an embodiment of the present invention may include a battery can having an opened upper side and configured to define an accommodation space therein, a top cap configured to cover the opened upper side of the battery can, an electrode assembly having a shape in which a positive electrode plate and a negative electrode plate are wound and sequentially stacked with a separator therebetween and disposed in the accommodation space; an electrode lead configured to electrically connect the electrode assembly to at least one of the battery can or the top cap, and a first extinguishing part including an extinguishing component and disposed between the electrode assembly and the battery can.

## Description

### TECHNICAL FIELD

### CROSS-REFERENCE TO RELATED APPLICATION

The present application claims the benefit of the priority of Korean Patent Application Nos. 10-2023-0095641, filed on July 21, 2023, and 10-2024-0089909, filed on July 8, 2024, which are hereby incorporated by reference in their entirety.

### TECHNICAL FIELD

The present invention relates to a secondary battery having an extinguishing function.

### BACKGROUND ART

Research and development on power generation based on Eco-friendly energy sources are being conducted to solve the problem of environmental pollution due to the use of petroleum resources and to resolve the problem of energy shortage due to the depletion of petroleum resources. Particularly, research on secondary batteries that are capable of being repeatedly charged/discharged and thus have high usability is actively conducted, and research is being conducted on various aspects of secondary batteries, such as materials, structures, processes, and stability.

In general, secondary batteries include nickelcadmium batteries, nickel-hydrogen batteries, lithium ion batteries, and lithium ion polymer batteries. Such a secondary battery is being applied to and used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the lithium secondary battery, first, electrode active material slurry is applied to a positive electrode collector and a negative electrode collector to manufacture a positive electrode and a negative electrode. Then, the electrodes are stacked on both sides of a separator form an electrode assembly. In addition, the electrode assembly may be accommodated in a battery case, an electrolyte may be injected, and then, sealing is performed.

Such a secondary battery is classified into a pouch type secondary battery and a can type secondary battery according to a material of a case accommodating the electrode assembly. In the pouch type secondary battery, an electrode assembly may be accommodated in a pouch made of a flexible polymer material. Also, in the can type secondary battery, an electrode assembly is accommodated in a case made of a metal or plastic material.

A can-type, i.e., cylindrical secondary battery, is manufactured by accommodating an wound jelly-roll type electrode assembly into a battery can and then subjecting the electrode assembly to an activation process using an electrolyte. In addition, when an internal temperature or internal pressure increases due to internal defects or external factors, the cylindrical secondary battery may interrupt current through a current interrupt member such as a positive temperature coefficient (PTC) or a current interrupt device (CID) to prevent secondary damages caused by the increasing in temperature and pressure.

However, when high-temperature flame and gases are generated in the secondary battery, since the cylindrical secondary battery does not have a separate extinguishing member, a problem of the high-temperature flame and gases spreading to surrounding components to cause damage often occurs. Thus, there is a need for a cylindrical secondary battery having an extinguishing function capable of suppressing the high-temperature flame and gases.

### DISCLOSURE OF THE INVENTION

### TECHNICAL PROBLEM

An object of the present invention for solving the above problem is to provide a secondary battery having an extinguishing function that effectively extinguishes high-temperature flame and gases generated therein.

### TECHNICAL SOLUTION

A secondary battery according to an embodiment of the present invention may include a battery can having an opened upper side and configured to define an accommodation space therein, a top cap configured to cover the opened upper side of the battery can, an electrode assembly having a shape in which a positive electrode plate and a negative electrode plate are wound and sequentially stacked with a separator therebetween and disposed in the accommodation space; an electrode lead configured to electrically connect the electrode assembly to at least one of the battery can or the top cap, and a first extinguishing part including an extinguishing component and disposed between the electrode assembly and the battery can.

The first extinguishing part may have a band shape that surrounds an outer surface of the electrode assembly.

The first extinguishing part may include: an upper cover part configured to surround an upper side surface of the electrode assembly; and a lower cover part configured to surround a lower side surface of the electrode assembly.

The electrode lead may include a positive electrode lead electrically connected to the positive electrode plate and a negative electrode lead electrically connected to the negative electrode plate, wherein the positive electrode lead may be connected to a top surface of the electrode assembly to electrically connect the electrode assembly to the top cap, and the negative electrode lead may be configured to electrically connect a bottom surface of the electrode assembly to the battery can, and when a width of the upper cover part is L₁, and a distance between the upper cover part and the lower cover part is L₃, L₁/L₃ may range of 0.5 to 3.

When a width of the lower cover part is L₂, L₁ and L₂ may be the same.

The electrode lead may include a positive electrode lead electrically connected to the positive electrode plate and a negative electrode lead electrically connected to the negative electrode plate, wherein the positive electrode lead may be configured to electrically connect a top surface of the electrode assembly to the top cap, and the negative electrode lead may be configured to electrically connect a top surface of the electrode assembly to the battery can, and when a width of the upper cover part is L₁, and a width of the lower cover part is L₂, L₁/ L₂ may range of 3 to 10.

The electrode lead may include a positive electrode lead electrically connected to the positive electrode plate and a negative electrode lead electrically connected to the negative electrode plate, wherein the positive electrode lead may be connected to a top surface of the electrode assembly to electrically connect the electrode assembly to the top cap, and the negative electrode lead may be configured to electrically connect a bottom surface and a side surface of the electrode assembly to the battery can, and when a width of the upper cover part is L₁, and a width of the lower cover part is L₂, L₁/L₂ may range of 3 to 6.

The first extinguishing part may include: a band body configured to surround an outer surface of the electrode assembly; and an extinguishing agent which is accommodated inside the band body and contains the extinguishing component.

The band body may include at least one of a poly propylene (PP) material or a polyethylene (PE) material.

The first extinguishing part may have a thickness of 0.5 mm to 2 mm.

A secondary battery according to an embodiment of the present invention may include a battery can having an opened upper side and configured to define an accommodation space therein, a top cap configured to cover the opened upper side of the battery can, an electrode assembly having a shape in which a positive electrode plate and a negative electrode plate are wound and sequentially stacked with a separator therebetween and disposed in the accommodation space; an electrode lead configured to electrically connect the electrode assembly to at least one of the battery can or the top cap, and a second extinguishing part including an extinguishing component and disposed between an upper side of the electrode assembly and the top cap.

The secondary battery may further include: a first current interrupt part disposed above the electrode assembly and connected to the electrode lead, the first current interrupt part being broken when a pressure inside the battery can increases to interrupt current flowing therein; and a second current interrupt part disposed between the first current interrupt part and the top cap and configured to interrupt current flowing therein when a temperature increases.

The second extinguishing part may include: a lower extinguishing member disposed in a space between the first current interrupt part and the second current interrupt part; and an upper extinguishing member disposed between the top cap and the second current interrupt part.

The lower extinguishing member may be attached to a top surface of the first current interrupt part facing the second current interrupt part.

The lower extinguishing member may be attached to a portion having relatively low rigidity at a portion of the first current interrupt part.

The lower extinguishing member may include: an extinguishing body attached to the first current interrupt part; and a liquid extinguishing agent which is accommodated in a liquid state inside the extinguishing body and comprises an extinguishing component.

The lower extinguishing member may be attached to a top surface of the first current interrupt part in a taping manner.

The upper extinguishing member may have a solid shape and include a material that is vaporized when a temperature increases.

The separator may be provided as a plurality of layers, and the extinguishing part may further include a third extinguishing part stacked between the plurality of layers of the separator.

### ADVANTAGEOUS EFFECTS

According to the preferred embodiment of the present invention, the high-temperature flame and gases generated internally may be effectively suppressed to previously prevent the damage of the internal components or the propagation of the flame and gases from occurring.

In addition, the configurations according to preferred embodiments of the present invention may include the effects that are capable of being easily predicted by those skilled in the art.

### BRIEF DESCRIPTION OF THE DRAWINGS

The following drawings attached in this specification illustrate a preferred embodiment of the present disclosure and function to make further understood the technical spirit of the present disclosure along with the detailed description of the present disclosure. The present disclosure should not be construed as being limited to only the drawings.
FIG. 1 is a cross-sectional view of a secondary battery according to Embodiment 1 of the present invention.
FIG. 2 is a perspective view of an electrode assembly according to Embodiment 1 of the present invention.
FIG. 3 is a perspective view illustrating a state in which the electrode assembly is surrounded by a first extinguishing part according to Embodiment 1 of the present invention.
FIG. 4 is a cross-sectional view of a secondary battery according to Embodiment 2 of the present invention.
FIG. 5 is a cross-sectional view illustrating a state in which an internal pressure of the secondary battery increases according to Embodiment 2 of the present invention.
FIG. 6 is a cross-sectional view illustrating a state in which a first current interrupt part is broken due to the increase in internal pressure of the secondary battery according to Embodiment 2 of the present invention.
FIG. 7 is a cross-sectional view illustrating a state in which a second current interrupt part is separated from a battery can due to the increase in internal pressure of the secondary battery according to Embodiment 2 of the present invention.
FIG. 8 is a perspective view illustrating a state in which an electrode assembly is surrounded by a first extinguishing part according to Embodiment 3 of the present invention.
FIG. 9 is a perspective view illustrating another state in which the electrode assembly is surrounded by the first extinguishing part according to Embodiment 3 of the present invention.
FIG. 10 is a cross-sectional view of a third extinguishing part and a separator according to Embodiment 4 of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Embodiment 1

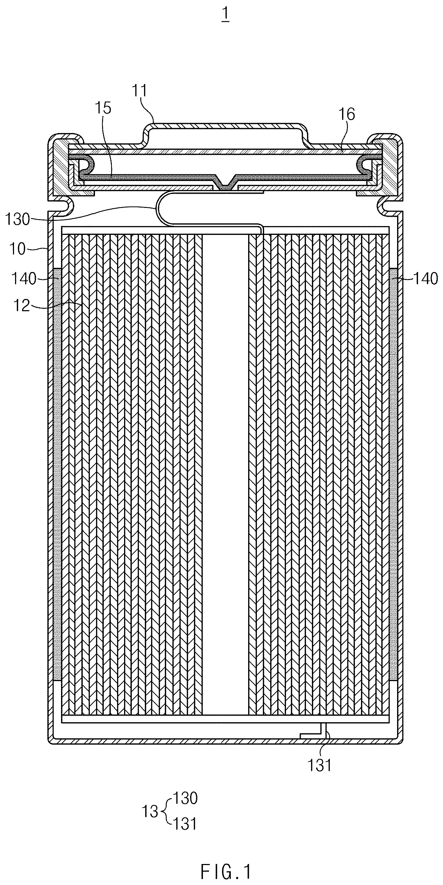

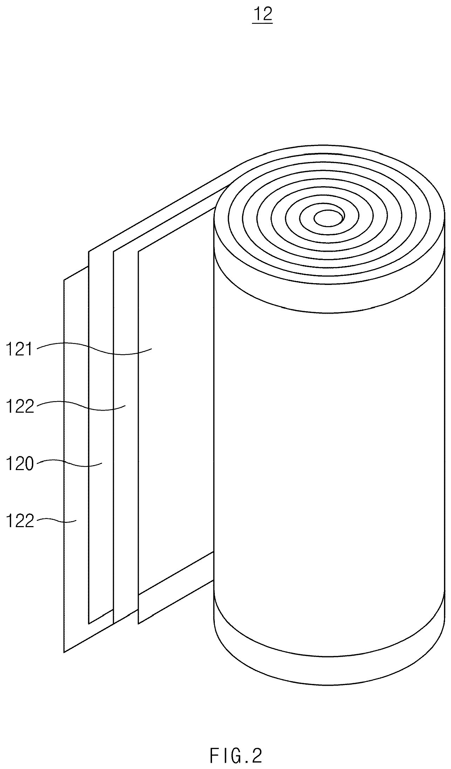

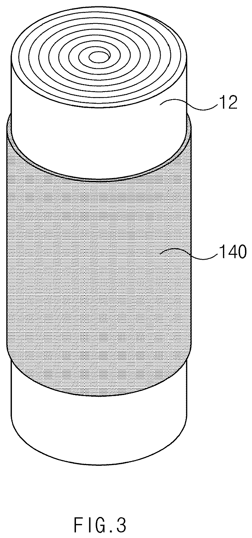

FIG. 1 is a cross-sectional view of a secondary battery 1 according to Embodiment 1 of the present invention. FIG. 2 is a perspective view of an electrode assembly according to Embodiment 1 of the present invention. FIG. 3 is a perspective view illustrating a state in which an electrode assembly is surrounded by a first extinguishing part according to Embodiment 1 of the present invention.

Referring to FIG. 1, a secondary battery 1 according to Embodiment 1 of the present invention may store electrical energy or output the stored electrical energy according to designs and needs. For example, the secondary battery 1 may accommodate an electrode assembly 12 in the form of a jelly-roll, which will be described later, therein.

In addition, the secondary battery 1 may prevent damage or ignition due to a high temperature and a high pressure by interrupting current flowing therein when an internal temperature or pressure increases abnormally due to internal defects or external factors.

Additionally, the secondary battery 1 includes a configuration that performs an extinguishing function to extinguish flame and gases when high-temperature flame and gases are generated therein, thereby previously preventing a problem of the flame and gases from being transferred.

Specifically, the secondary battery 1 may include a battery can 10, a top cap 11, an electrode assembly 12, an electrode lead 13, and a first extinguishing part 140.

The battery can 10 includes a can type and may define an outer surface of the secondary battery 1. Specifically, the battery can 10 may have a cylindrical shape. However, the shape of the battery can 10 is not limited to the cylindrical shape and may be manufactured in various other shapes.

In addition, the battery can 10 may define an accommodation space therein, and an upper side of the battery can 10 may be opened. Conversely, a lower side of the battery can 10 may be provided as a sealed structure.

The battery can 10 may be made of a lightweight conductive metal material such as aluminum, nickel, stainless steel, or an alloy thereof.

The top cap 11 may cover the opened upper side of the battery can 10. That is, the top cap 11 may be provided at an upper side of the battery can 10 so that the internal space of the battery can 10 is sealed.

FIG. 2 is a perspective view of the electrode assembly 12 according to Embodiment 1 of the present invention.

Referring to FIG. 2, the electrode assembly 12 may be disposed in the accommodation space of the battery can 10 and may store or output electrical energy through a chemical reaction. For example, the electrode assembly 12 may include a jelly-roll shape. In other words, the electrode assembly 12 may include a configuration in which a positive electrode plate 120 and a negative electrode plate 121 are wound and sequentially stacked with a separator 122 therebetween.

The positive electrode plate 120 and the negative electrode plate 121 may be manufactured by applying active material slurry to a metal current collector including aluminum or copper. As lithium ions move between the positive electrode plate 120 and the negative electrode plate 121, the electrical energy may be stored or output from the electrode assembly 12.

The electrode lead 13 may electrically connect the electrode assembly 12 to at least one of the battery can 10 or the top cap 11. In other words, the electrode lead 13 may include a negative electrode lead 131 electrically connecting a bottom surface of the electrode assembly 12 to an inner bottom surface of the battery can 10, and a positive electrode lead 130 electrically connecting a top surface of the electrode assembly 12 and an inner bottom surface of the top cap 11.

However, the structure of the electrode lead 13 is not limited thereto, and the electrode lead 13 may be provided in various shapes depending on the designs, such as both the positive electrode lead 130 and the negative electrode lead 131 being provided on the top surface of the electrode assembly 12 or the negative electrode lead 131 being provided on a side surface of the electrode assembly 12.

The electrode lead 13 may be connected to a portion of the electrode assembly 12 to which the active material slurry is not applied. For example, a non-coating portion on which the active material slurry is not applied may be provided at beginning ends and distal ends of the positive electrode plate 120 and the negative electrode plate 121 based on a direction in which the polarity plates are wound. The electrode lead 13 may be welded and coupled to the non-coating portion.

The first extinguishing part 140 may contain extinguishing components and perform the extinguishing function. For example, when the high-temperature flame and gases are generated in the electrode assembly 12 due to the internal defect or external factor, the first extinguishing part 140 may discharge a specific extinguishing agent to extinguish the flame and gases.

The first extinguishing part 140 may include an extinguishing material including at least one component selected from the group consisting of NH₄H₂PO₄, NAHCO₃, KHCO₃, CO₂, CF₂ClBr, CF₃Br, H₂SO₄, K₂CO₃, or Al₂(SO₄)₃.

FIG. 3 is a perspective view illustrating a state in which the electrode assembly 12 is surrounded by the first extinguishing part 140 according to Embodiment 1 of the present invention.

Referring to FIG. 3, the first extinguishing part 140 may be provided to surround an outer surface of the electrode assembly 12. For example, the first extinguishing part 140 may be disposed between the electrode assembly 12 and the battery can 10 to surround the side surface of the electrode assembly 12.

The first extinguishing part 140 may include a band shape that surrounds the outer surface of the electrode assembly 12. That is, the first extinguishing part 140 may be provided in a form that surrounds the side surface of the electrode assembly 12 and simultaneously tightens the side surface of the electrode assembly 12.

The first extinguishing part 140 may include a band body and an extinguishing agent.

The band body may surround the outer surface of the electrode assembly 12. For example, the electrode assembly 12 may include a jelly-roll shape that is a cylindrical shape, and the band body may surround the side surface of the electrode assembly 12 along a circumference of the electrode assembly 12.

In addition, the band body may define an accommodation space therein, so that the extinguishing agent, which will be described later, is accommodated therein.

The band body may include a flexible and insulating material. For example, the band body may include at least one of a poly propylene (PP) material or a polyethylene (PE) material. That is, the band body may not electrically react to the electrolyte contained in the battery can 10.

The extinguishing agent may be accommodated within the band body and may contain extinguishing components. For example, the extinguishing may have a powder form. Specifically, the extinguishing agent may be provided as at least one of components of NH₄H₂PO₄, NAHCO₃ or KHCO₃.

However, the components of the extinguishing agent are not limited thereto and may be provided as various other components depending on the designs and needs.

A thickness of the first extinguishing section 140 may be 0.5 mm to 2 mm. If the thickness of the first extinguishing part 140 is less than 0.5 mm, the first extinguishing part 140 may become considerably thin to be easily broken or may be separated from the electrode assembly 12. In addition, if the thickness of the first extinguishing part 140 is less than 0.5 mm, the first extinguishing part 140 may not be able to sufficiently perform the extinguishing function.

On the other hand, if the thickness of the first extinguishing part 140 exceeds 2 mm, a space may be defined between the electrode assembly 12 and the battery can 10, and thus, an energy density of the secondary battery 1 may be reduced to cause a problem in that performance of the secondary battery 1 is deteriorated. In addition, when the thickness of the first extinguishing part 140 exceeds 2 mm, a larger space may be defined between the electrode assembly 12 and the battery can 10, and thus, the electrode assembly 12 may be unstably fixed inside the battery can 10.

As a result, when the high-temperature flame and gases are generated from the electrode assembly 12, the first extinguishing part 140 installed on the outer surface of the electrode assembly 12 may also be ignited, and thus, the extinguishing agent contained inside the first extinguishing part 140 may be discharged. The discharged extinguishing agent may suppress the flame and gases to perform the extinguishing function.

### Embodiment 2

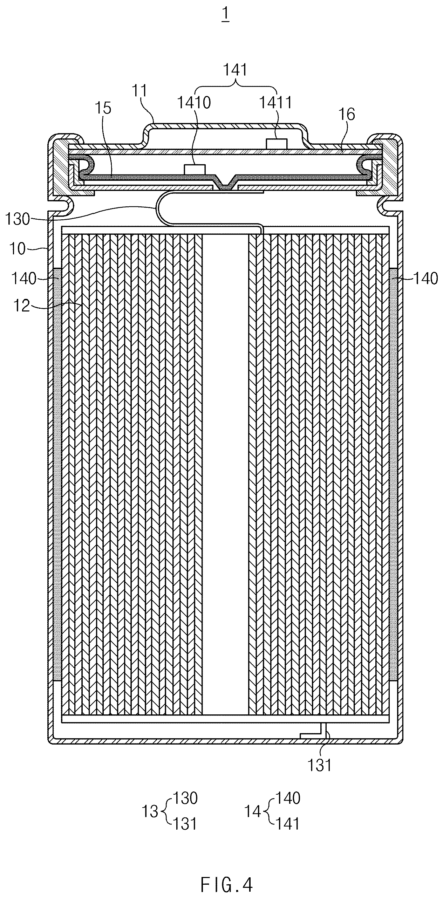

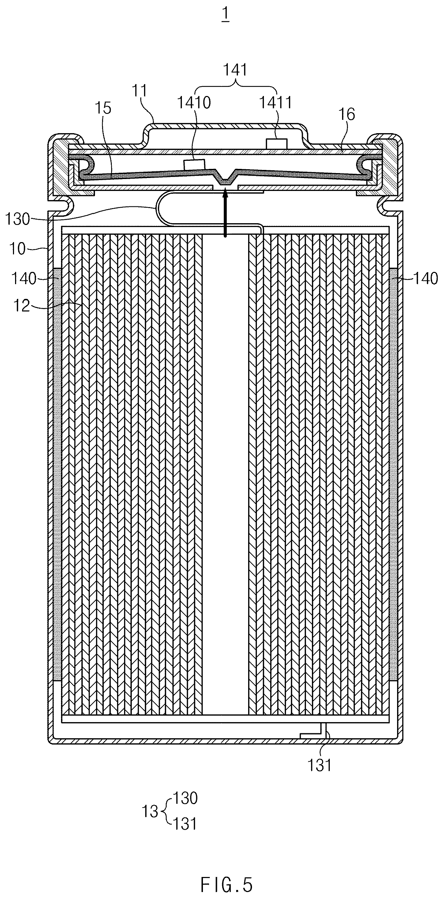

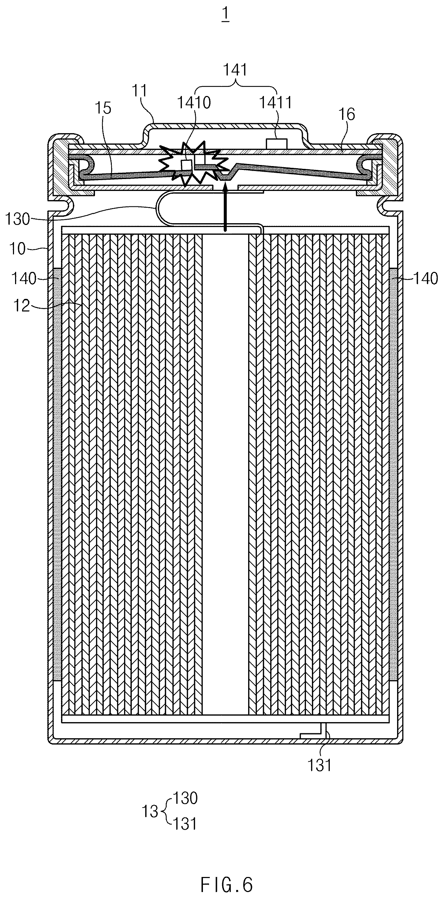

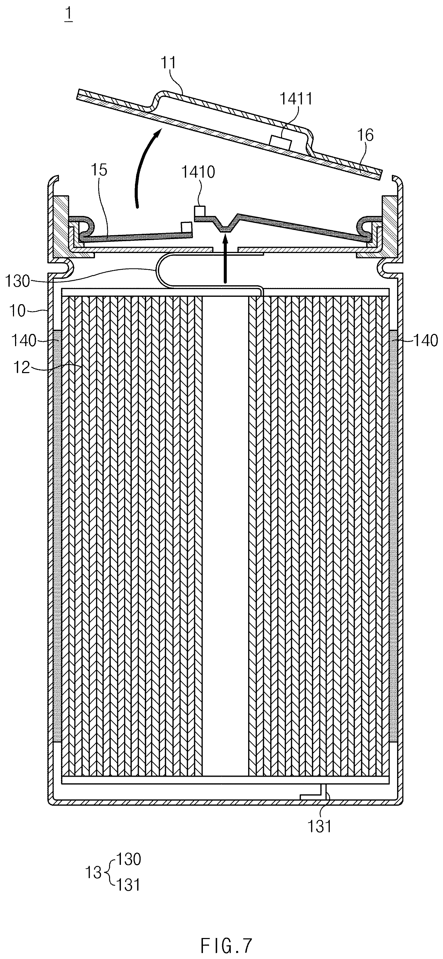

FIG. 4 is a cross-sectional view of a secondary battery according to Embodiment 2 of the present invention. FIG. 5 is a cross-sectional view illustrating a state in which an internal pressure of the secondary battery increases according to Embodiment 2 of the present invention. FIG. 6 is a cross-sectional view illustrating a state in which a first current interrupt part is broken due to the increase in internal pressure of the secondary battery according to Embodiment 2 of the present invention. FIG. 7 is a cross-sectional view illustrating a state in which a second current interrupt part is separated from a battery can due to the increase in internal pressure of the secondary battery according to Embodiment 2 of the present invention.

Hereinafter, a secondary battery according to Embodiment 2 of the present invention is described. The secondary battery according to Embodiment 2 of the present invention may include a second extinguishing part provided in a different manner from the first extinguishing part described in the secondary battery according to Embodiment 1. Descriptions of contents duplicated with the contents of the secondary battery according to Embodiment 1 described above will be omitted below.

Referring to FIG. 4, the secondary battery according to Embodiment 2 of the present invention may include an extinguishing part capable of suppressing high-temperature flame, etc. generated therein. Thus, the secondary battery according to Embodiment 2 of the present invention may include a second extinguishing part 141.

The second extinguishing part 141 may contain an extinguishing component to perform a extinguishing function. For example, when the high-temperature flame and gases are generated in the electrode assembly 12 due to the internal defect or external factor, the second extinguishing part 141 may discharge a specific extinguishing agent to extinguish the flame and gases.

The second extinguishing part 141 may include an extinguishing material including at least one component selected from the group consisting of NH₄H₂PO₄, NAHCO₃, KHCO₃, CO₂, CF₂ClBr, CF₃Br, H₂SO₄, K₂CO₃, or Al₂(SO₄)₃.

The second extinguishing part 141 may be disposed between an upper side of the electrode assembly 12 and a top cap 11. Specifically, the secondary battery 1 may further include a first current interrupt part 15 and a second current interrupt part 16, which interrupt internal current according to an increase in internal temperature or pressure, and the second extinguishing part 141 may be disposed on an area partitioned by the first current interrupt part 15 and the second current interrupt part 16.

More specifically, the first current interrupt part 15 may be broken when the pressure inside the battery can 10 increases, thereby interrupting current flowing therein. For example, the first current interrupt part 15 may include a current interrupt device (CID) filter.

In addition, the first current interrupt part 15 may be disposed on an upper side of the electrode assembly 12 and be connected to an electrode lead 13. That is, the first current interrupt part 15 may be in contact with the electrode lead 13 while being spaced a predetermined distance from a top surface of the electrode assembly 12. The first current interrupt part 15 may have a structure that is spaced apart from the electrode lead 13 to be broken when the pressure inside the battery can 10 increases.

The second current interrupt part 16 may interrupt the current flowing inside the battery can 10 when the temperature inside the battery can increases. For example, the second current interrupt part 16 may include a positive temperature coefficient (PTC). That is, when the temperature inside the battery can 10 rises, internal resistance of the second current interrupt part 16 increases to interrupt the internal current of the second current interrupt part 16.

The second current interrupt part 16 may be disposed between the first current interrupt part 15 and the top cap 11. For example, the second current interrupt part 16 may be connected to the top cap 11 to define a space between the second current interrupt part 16 and the top cap 11. In addition, a portion of the second current interrupt part 16 may be spaced apart from the first current interrupt part 15 to define a space between the second current interrupt part 16 and the first current interrupt part 15.

The second extinguishing part 141 may include a lower extinguishing member 1410 disposed in the space between the first current interrupt part 15 and the second current interrupt part 16 and an upper extinguishing member 1411 disposed between the top cap 11 and the second current interrupt part 16.

The lower extinguishing member 1410 may be attached to a top surface of the first current interrupt member 15 facing the second current interrupt member 16. For example, the lower extinguishing member 1410 may be attached to a top surface of the first current interrupt member 15 in a taping manner.

Specifically, the lower extinguishing member 1410 may include an extinguishing body attached to the first current interrupt member 15 and a liquid extinguishing agent that is accommodated inside the extinguishing body in a liquid state and contains an extinguishing component. For example, the liquid extinguishing agent may contain at least one of components of NAHCO3, H2SO4, K2CO3, or A12(SO4)3.

The upper extinguishing member 1411 may be attached to a top surface of the second current interrupt member 16 facing the top cap 11. Alternatively, the upper extinguishing member 1411 may be attached to a bottom surface of the top cap 11 facing the second current interrupt member 16.

As described above, when the upper extinguishing member 1411 is provided to be integrated with the top cap 11 or the second current interrupt member 16, and the top cap 11 and the second current interrupt member 16 are separated from the battery can 10 due to a high temperature and a high pressure therein, the upper extinguishing member 1411 may be separated from the battery can 10 together with the top cap 11 and the second current interrupt member 16.

FIG. 5 is a cross-sectional view illustrating a state in which an internal pressure of the secondary battery 1 increases according to an embodiment of the present invention, and FIG. 6 is a cross-sectional view illustrating a state in which the first current interrupt part 15 is broken due to the increase in internal pressure of the secondary battery 1 according to an embodiment of the present invention.

Referring to FIGS. 5 and 6, when a gas is generated from the electrode assembly 12, and thus, a pressure inside the battery can 10 increases, the first current interrupt part 15 may be pushed upward by the pressure inside the battery can 10. When the pressure inside the battery can 10 becomes higher, a portion of the first current interrupt part 15 may be broken, and the current flowing inside the first current interrupt part 15 may be interrupted.

In this case, the lower extinguishing member 1410 may be attached to a portion of the first current interrupt member 15 that has relatively low rigidity. That is, when the pressure inside the battery can 10 increases, a breakage phenomenon may occur at a portion having relatively low rigidity in the first current interrupt part 15, and the lower extinguishing member 1410 attached to the portion may also be broken when subjected to external force.

In other words, when the extinguishing body is attached to the portion having the relatively low rigidity in the first current interrupt part 15, the portion having the relatively low rigidity in the first current interrupt part 15 may be broken, and also, the extinguishing body may also be torn. At the same time, the liquid extinguishing agent contained inside the extinguishing body may leak out to flow into the broken portion, and thus, the liquid extinguishing agent may reach the electrode assembly 12.

As a result, when the high-temperature flame and gas are generated from the electrode assembly 12, and thus, the inside of the battery can 10 becomes a state of the high temperature and the high pressure, the breakage may occur primarily at the portion having the relatively low rigidity in the first current interrupt part 15, and thus, as soon as the flame and gases are generated, the lower extinguishing member 1410 may immediately suppress the flame and gases.

In addition, since the lower extinguishing member 1410 includes the liquid extinguishing agent in the liquid state, the liquid extinguishing agent may be permeated into the electrode assembly 12 to suppress the flame and gases more quickly.

FIG. 7 is a cross-sectional view illustrating a state in which the second current interrupt part 16 is separated from the battery can 10 due to the increase in internal pressure of the secondary battery 1 according to an embodiment of the present invention.

Referring to FIG. 7, as the internal pressure of the battery can 10 increases, the breakage may occur at a portion of the first current interrupt part 15, and the top cap 11 and the second current interrupt part 16 may be integrally separated from the battery can 10.

In this case, as described above, the upper extinguishing member 1411 may be separated from the battery can 10 together with the top cap 11 and the second current interrupt member 16. In addition, the upper extinguishing member 1411 may be provided in a solid form and may include a material that is vaporized when a temperature increases.

As a result, according to the structure and material characteristics of the upper extinguishing member 1411 as described above, when a battery module is provided by providing a plurality of secondary batteries 1, the upper extinguishing member 1411 may previously prevent the battery module from being damaged by fire.

Specifically, when the high-temperature flame and gases are generated in one of the secondary batteries 1, the upper extinguishing member 1411 may be separated from the battery can 10 and then vaporized to be spread in the form of a gas into the battery module and prevent the high-temperature flame and gases from being spread, thereby preventing secondary damage caused by the flame and gases in advance.

### Embodiment 3

Hereinafter, a secondary battery 1 according to Embodiment 3 of the present invention is described. The secondary battery 1 according to Embodiment 3 of the present invention may include a first extinguishing part 140 having a different structure, unlike the secondary battery 1 according to Embodiment 1. Descriptions of contents duplicated with those of the secondary battery 1 according to Embodiment 1 described above will be omitted below.

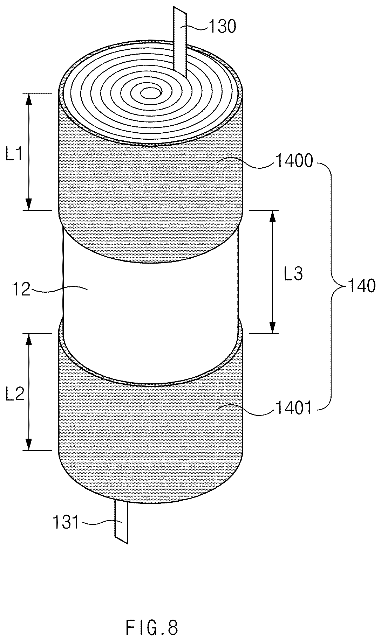

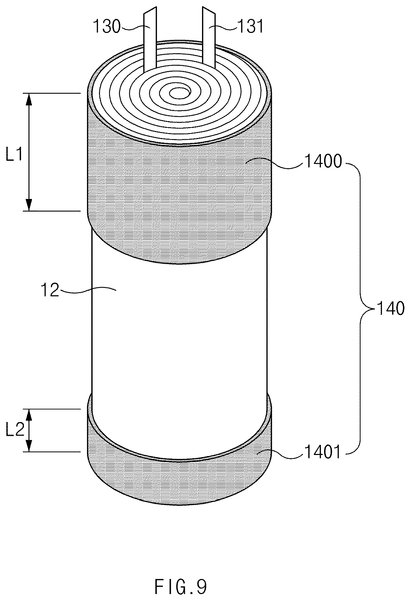

FIG. 8 is a perspective view illustrating a state in which an electrode assembly is surrounded by a first extinguishing part according to Embodiment 3 of the present invention. FIG. 9 is a perspective view illustrating another state in which the electrode assembly is surrounded by the first extinguishing part according to Embodiment 3 of the present invention.

Referring to FIGS. 8 and 9, a first extinguishing part 140 may include a plurality of configurations surrounding an outer surface of an electrode assembly 12. For example, the first extinguishing part 140 may include a plurality of configurations that are provided differently depending on a coupled form of the electrode assembly 12 and an electrode lead 13. Specifically, the first extinguishing part 140 may include an upper cover part 1400 and a lower cover part 1401.

The upper cover part 1400 may surround an upper side surface of the electrode assembly 12. The lower cover part 1401 may surround a lower side surface of the electrode assembly 12. That is, the lower cover part 1401 may be disposed below the upper cover part 1400 and provided to be spaced a predetermined distance from the upper cover part 1400.

FIG. 8 is a perspective view illustrating a state in which the electrode assembly 12 is surrounded by the first extinguishing part 140 according to another embodiment of the present invention.

Referring to FIG. 8, a positive electrode lead 130 may be connected to a top surface of the electrode assembly 12 and may electrically connect the electrode assembly 12 to the top cap 11. A negative electrode lead 131 may electrically connect a bottom surface of the electrode assembly 12 to the battery can 10.

When a width of the upper cover part 1400 is L₁, and a width of the lower cover part 1401 is L₂, L₁ and L₂ may be the same. In other words, since an ignition phenomenon mainly occurs at a portion, at which the positive electrode lead 130 and the negative electrode lead 131 are coupled, of respective portions of the electrode assembly 12, when the positive electrode lead 130 and the negative electrode lead 131 are provided to extend from the electrode assembly 12 in different directions, the secondary battery 1 according to the second embodiment may more effectively suppress flame and gases by designing the width of the upper cover part 1400 and the width of the lower cover part 1401 to be the same.

In addition, when the width of the upper cover part 1400 is L₁, and a distance between the upper cover part 1400 and the lower cover part 1401 is L₃, L₁/L₃ may be 0.5 to 3. That is, the upper cover part 1400 and the lower cover part 1401 may be spaced a predetermined distance from each other.

Specifically, when L₁/L₃ is less than 0.5, the upper cover part 1400 and the lower cover part 1401 may be spaced a considerable distance from each other, and the width of each of the upper cover part 1400 and the lower cover part 1401 may become thinner, and thus, an extinguishing function of the first extinguishing part 140 may not be performed properly. On the other hand, when L₁/L₃ exceeds 3, a gap between the upper cover part 1400 and the lower cover part 1401 becomes short, and thus, most of a side surface of the electrode assembly 12 may be surrounded by the upper cover part 1400 and the lower cover part 1401, and thus, an energy density of the secondary battery 1 decreases to deteriorate performance of the secondary battery 1.

FIG. 9 is a perspective view illustrating a state in which the electrode assembly 12 is surrounded by the first extinguishing part 140 according to another embodiment of the present invention.

Referring to FIG. 9, the positive electrode lead 130 may electrically connect the top surface of the electrode assembly 12 to the top cap 11, and the negative electrode lead 131 may electrically connect the top surface of the electrode assembly 12 to the battery can 10. That is, the positive electrode lead 130 and the negative electrode lead 131 may be connected to the same top surface of the electrode assembly 12.

As described above, since the ignition phenomenon mainly occurs at the portion, at which the positive electrode lead 130 and the negative electrode lead 131 are coupled, of the respective portions of the electrode assembly 12, when the positive electrode lead 130 and the negative electrode lead 131 are provided to be connected to the top surface, i.e., an upper side, of the electrode assembly 12, the width of the upper cover part 1400 may be considerably larger than the width of the lower cover part 1401.

Specifically, when the width of the upper cover part 1400 is L₁, and the width of the lower cover part 1401 is L₂, L₁/L₂ may be 3 to 10. When L₁/L₂ is less than 3, the width of the upper cover part 1400 becomes thinner, and the extinguishing function for an upper side of the electrode assembly 12 in which the positive electrode lead 130 and the negative electrode lead 131 are distributed may be reduced. On the other hand, when L₁/L₂ exceeds 10, the width of the upper cover part 1400 becomes excessively wide, and thus, the extinguishing function may be concentrated only at the upper side of the electrode assembly 12 to deteriorate the extinguishing function for a lower side of the electrode assembly 12.

Finally, when the positive electrode lead 130 is connected to the top surface of the electrode assembly 12 and electrically connects the electrode assembly 12 to the top cap 11, and the negative electrode lead 131 electrically connects the bottom surface and the side surface of the electrode assembly 12 to the battery can 10, the width of the upper cover part 1400 may be provided to be wider than the width of the lower cover part 1401.

Specifically, when the width of the upper cover part 1400 is L₁, and the width of the lower cover part 1401 is L₂, L₁/L₂ may be 3 to 6. This is because the negative electrode lead 131 is provided with a large contact area, and thus, the temperature of the positive electrode lead 130 becomes higher to cause ignition more frequently. Therefore, it may be desirable to design the width of the upper cover part 1400 to be wider than the width of the lower cover part 1401.

As a result, the upper cover part 1400 and the lower cover part 1401 may be differently designed depending on the shapes of the electrode assembly 12 and the electrode lead 13, and thus, when the high-temperature flame and gases are generated from the electrode assembly 12, the first extinguishing part 140 may perform the extinguishing function more effectively.

### Embodiment 4

Hereinafter, a secondary battery 1 according to Embodiment 4 of the present invention will be described. Unlike the secondary batteries 1 according to Embodiments 1 to 3, the secondary battery 1 according to Embodiment 4 of the present invention may include an extinguishing part having a different structure. Descriptions of contents duplicated with those of the secondary battery 1 according to Embodiments 1 to 3 described above will be omitted below.

The secondary battery according to Embodiment 4 of the present invention may further include a third extinguishing part 142 designed in a separator 122.

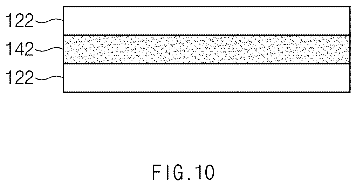

FIG. 10 is a cross-sectional view of the third extinguishing part 142 and the separator 122 according to Embodiment 4 of the present invention.

Referring to FIG. 10, the separator 122 may be provided as a plurality of layers, and the third extinguishing part 142 may be stacked between the plurality of layers of the separator 122. That is, the third extinguishing part 142 may be applied to the inside of the separator 122 so as to be sealed between the plurality of layers of the separator 122. In other words, the separator 122 may be wound in a state in which the third extinguishing part 142 is accommodated therein to become a portion of the electrode assembly 12.

As a result, according to the structure of the third extinguishing part 142 as described above, the third extinguishing part 142 may be manufactured to be integrated with the separator 122 in the sealed state inside the separator 122, and thus, when high-temperature flame and gases are generated in a portion of the electrode assembly 12, the third extinguishing part 142 accommodated in the separator 122 may immediately perform an extinguishing function. In addition, since the third extinguishing part 142 is manufactured to be integrated with the separator 122, there may be an advantage in that the separator 122 having the extinguishing function may be designed more easily.

The above-disclosed subject matter is to be considered illustrative, and not restrictive, and the appended claims are intended to cover all such modifications, enhancements, and other embodiments, which fall within the true spirit and scope of the present disclosure.

Thus, the embodiment of the present invention is to be considered illustrative, and not restrictive, and the technical spirit of the present invention is not limited to the foregoing embodiment.

Therefore, the scope of the present disclosure is defined not by the detailed description of the invention but by the appended claims, and all differences within the scope will be construed as being included in the present disclosure.

### [Description of the Symbols]

1: Secondary battery
10: battery can
11: Top cap
12: Electrode assembly
13: Electrode lead
15: First current interrupt part
16: Second current interrupt part
120: Positive electrode plate
121: Negative electrode plate
122: Separator
130: Positive electrode lead
131: Negative electrode lead
140: First extinguishing part
141: Second extinguishing part
142: Third extinguishing part
1400: Upper cover part
1401: Lower cover part
1410: Lower extinguishing member
1411: Upper extinguishing member

## Claims

1. A secondary battery comprising:
a battery can having an opened upper side and configured to define an accommodation space therein;
a top cap configured to cover the opened upper side of the battery can;
an electrode assembly having a shape in which a positive electrode plate and a negative electrode plate are wound and sequentially stacked with a separator therebetween and disposed in the accommodation space;
an electrode lead configured to electrically connect the electrode assembly to at least one of the battery can or the top cap; and
a first extinguishing part comprising an extinguishing component and disposed between the electrode assembly and the battery can.

2. The secondary battery of claim 1, wherein the first extinguishing part has a band shape that surrounds an outer surface of the electrode assembly.

3. The secondary battery of claim 2, wherein the first extinguishing part comprises:
an upper cover part configured to surround an upper side surface of the electrode assembly; and
a lower cover part configured to surround a lower side surface of the electrode assembly.

4. The secondary battery of claim 3, wherein the electrode lead comprises a positive electrode lead electrically connected to the positive electrode plate and a negative electrode lead electrically connected to the negative electrode plate,
wherein the positive electrode lead is connected to a top surface of the electrode assembly to electrically connect the electrode assembly to the top cap, and the negative electrode lead is configured to electrically connect a bottom surface of the electrode assembly to the battery can, and
when a width of the upper cover part is L₁, and a distance between the upper cover part and the lower cover part is L₃, L₁/L₃ ranges of 0.5 to 3.

5. The secondary battery of claim 4, wherein, when a width of the lower cover part is L₂, L₁ and L₂ are the same.

6. The secondary battery of claim 3, wherein the electrode lead comprises a positive electrode lead electrically connected to the positive electrode plate and a negative electrode lead electrically connected to the negative electrode plate,
wherein the positive electrode lead is configured to electrically connect a top surface of the electrode assembly to the top cap, and the negative electrode lead is configured to electrically connect a top surface of the electrode assembly to the battery can, and
when a width of the upper cover part is L₁, and a width of the lower cover part is L₂, L₁/L₂ ranges of 3 to 10.

7. The secondary battery of claim 3, wherein the electrode lead comprises a positive electrode lead electrically connected to the positive electrode plate and a negative electrode lead electrically connected to the negative electrode plate,
wherein the positive electrode lead is connected to a top surface of the electrode assembly to electrically connect the electrode assembly to the top cap, and the negative electrode lead is configured to electrically connect a bottom surface and a side surface of the electrode assembly to the battery can, and
when a width of the upper cover part is L₁, and a width of the lower cover part is L₂, L₁/L₂ ranges of 3 to 6.

8. The secondary battery of claim 2, wherein the first extinguishing part comprises:
a band body configured to surround an outer surface of the electrode assembly; and
an extinguishing agent which is accommodated inside the band body and contains the extinguishing component.

9. The secondary battery of claim 8, wherein the band body comprises at least one of a poly propylene (PP) material or a polyethylene (PE) material.

10. The secondary battery of claim 2, wherein the first extinguishing part has a thickness of 0.5 mm to 2 mm.

11. A secondary battery comprising:
a battery can having an opened upper side and configured to define an accommodation space therein;
a top cap configured to cover the opened upper side of the battery can;
an electrode assembly having a shape in which a positive electrode plate and a negative electrode plate are wound and sequentially stacked with a separator therebetween and disposed in the accommodation space;
an electrode lead configured to electrically connect the electrode assembly to at least one of the battery can or the top cap; and
a second extinguishing part comprising an extinguishing component and disposed between an upper side of the electrode assembly and the top cap.

12. The secondary battery of claim 11, further comprising:
a first current interrupt part disposed above the electrode assembly and connected to the electrode lead, the first current interrupt part being broken when a pressure inside the battery can increases to interrupt current flowing therein; and
a second current interrupt part disposed between the first current interrupt part and the top cap and configured to interrupt current flowing therein when a temperature increases,
wherein the second extinguishing part comprises:
a lower extinguishing member disposed in a space between the first current interrupt part and the second current interrupt part; and
an upper extinguishing member disposed between the top cap and the second current interrupt part.

13. The secondary battery of claim 12, wherein the lower extinguishing member is attached to a top surface of the first current interrupt part facing the second current interrupt part.

14. The secondary battery of claim 13, wherein the lower extinguishing member is attached to a portion having relatively low rigidity at a portion of the first current interrupt part.

15. The secondary battery of claim 14, wherein the lower extinguishing member comprises:
an extinguishing body attached to the first current interrupt part; and
a liquid extinguishing agent which is accommodated in a liquid state inside the extinguishing body and comprises an extinguishing component.

16. The secondary battery of claim 13, wherein the lower extinguishing member is attached to a top surface of the first current interrupt part in a taping manner.

17. The secondary battery of claim 12, wherein the upper extinguishing member has a solid shape and comprises a material that is vaporized when a temperature increases.

18. The secondary battery of claim 1 or 11, wherein the separator is provided as a plurality of layers, and
the extinguishing part further comprises a third extinguishing part stacked between the plurality of layers of the separator.
